(19) Europäisches Patentamt / European Patent Office / Office européen des brevets

(11) **EP 3 321 901 B1**

(12) **EUROPEAN PATENT SPECIFICATION**

(45) Date of publication and mention
of the grant of the patent:
**25.03.2020 Bulletin 2020/13**

(51) Int Cl.:
**G08B 13/00** (2006.01)  **G08B 13/186** (2006.01)
**G08B 13/12** (2006.01)  **G01H 9/00** (2006.01)
**G08B 13/16** (2006.01)

(21) Application number: **16840733.6**

(22) Date of filing: **17.08.2016**

(86) International application number:
**PCT/CN2016/095649**

(87) International publication number:
**WO 2017/036304 (09.03.2017 Gazette 2017/10)**

(54) **DISTRIBUTED OPTICAL FIBER PERIMETER SECURITY SYSTEM, AND SOUND RESTORATION SYSTEM AND METHOD**

VERTEILTES GLASFASERUMGEBUNGSSICHERHEITSSYSTEM SOWIE SYSTEM UND VERFAHREN ZUR SCHALLWIEDERHERSTELLUNG

SYSTÈME DE SÉCURITÉ PÉRIMÉTRIQUE À FIBRE OPTIQUE RÉPARTIE, ET SYSTÈME ET PROCÉDÉ DE RESTITUTION SONORE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2015 CN 201510557454**

(43) Date of publication of application:
**16.05.2018 Bulletin 2018/20**

(73) Proprietor: **Nuctech Company Limited
TongFang Building,
Shuangqinglu,
Haidian District
Beijing 100084 (CN)**

(72) Inventors:
• **WEI, Yufeng**
  **Beijing 100084 (CN)**
• **YAO, Kai**
  **Beijing 100084 (CN)**
• **XU, Jun**
  **Beijing 100084 (CN)**
• **YANG, Jie**
  **Beijing 100084 (CN)**
• **GAO, Baisong**
  **Beijing 100084 (CN)**
• **XU, Huikang**
  **Beijing 100084 (CN)**
• **XIAO, Hang**
  **Beijing 100084 (CN)**
• **XU, Ming**
  **Beijing 100084 (CN)**
• **LIU, Yunfei**
  **Beijing 100084 (CN)**
• **DONG, Kun**
  **Beijing 100084 (CN)**
• **MAO, Xianhui**
  **Beijing 100084 (CN)**

(74) Representative: **Cabinet Beau de Loménie
158, rue de l'Université
75340 Paris Cedex 07 (FR)**

(56) References cited:
**EP-A1- 2 627 966    WO-A1-2013/185208
WO-A2-03/014774    CN-A- 101 969 344
CN-A- 103 208 161    CN-A- 103 595 489
CN-A- 105 096 490    CN-U- 205 003 805
JP-A- 2011 214 921    US-A1- 2007 247 631
US-B1- 6 621 947**

• **CHOI KYOO NAM ET AL: "Distributed fiber optic pressure/seismic sensor for low cost monitoring of long perimeters", VISUAL COMMUNICATIONS AND IMAGE PROCESSING; 20-1-2004 - 20-1-2004; SAN JOSE,, vol. 5090, no. 1, 18 September 2003 (2003-09-18), pages 134-141, XP008090990, DOI: 10.1117/12.484911 ISBN: 978-1-62841-730-2**

**Description**

**TECHNICAL FIELD**

The present disclosure relates to the field of security technologies, and in particular, relates to a sound restoration system, a sound restoration method, and a distributed optical fiber perimeter security system.

**BACKGROUND**

Optical fibers are not merely used to transmit signals, and are also used as sensors when being employed to sensing applications. When ambient interference is propagated to the optical fibers, features or properties of optical signals transmitted over the optical fibers will be partially changed. A dedicated sensing instrument is configured to be capable of monitoring interference causing variations of the features or properties of the optical signals such as attenuation, phase, wavelength, polarization, mode field distribution and propagation time. By means of modulation of the optical signals, measurements of various events and states become possible.

A distributed optical fiber perimeter security system is a distributed sensing system that uses the optical fiber as a sensing and transmission medium. Within a region in which the sensing optical fibers are arranged, the optical fiber perimeter security system is capable of monitoring, remotely and in real time, sudden events such as intrusion behaviors in a specific precision range. The optical fiber perimeter security system may be applied to perimeter security supervision in prisons, important military targets, arsenals, railings along railways and the like, and may also be applied to perimeter security supervision in residential blocks, government organs, nuclear power plants, airports and the like important facilities.

A conventional distributed optical fiber perimeter security system divides the perimeter into several small monitoring areas (which are also referred to as protection areas), and each protection area is monitored by one optical fiber sensing unit. This optical fiber sensing unit generally has no positioning capability, and is only capable of sensing and transmitting intrusion vibration signals and judging whether an intrusion event occurs. By means of the multiplexing technology, a plurality of optical fiber sensing units construct a network, such that it may judge an intrusion event occurs in which protection area, thereby achieving the objective of positioning.

However, since the optical fibers in each protection area are exposed to the ambient environment, false alarms may probably be generated due to interference from the ambient environment (for example, winds, rains, flying birds and the like), thereby to cause users puzzled. Therefore, assistant means need to be taken to facilitate the users to make a further accurate judgment.

Document EP 2 627 966 A1 discloses a fiber-optic interferometer systems used in security, surveillance or monitoring applications.

**SUMMARY**

The present disclosure is intended to provide a sound restoration system having a sound restoration capability, a sound restoration method, and a distributed optical fiber perimeter security system, so as to overcome, at least to some extent, one or more problems caused by restrictions and defects in the related arts.

Other characteristics, features, and advantages of the present disclosure become obvious from the following detailed description, or are partially derived from practice of the present disclosure.

According to a first aspect of the present disclosure, a sound restoration system is provided, as defined in appended claim 1.

In an exemplary embodiment of the present disclosure, the audio output mechanism is configured to restore the audio signal based on a light intensity of the interference signal.

In an exemplary embodiment of the present disclosure, the optical fiber Michelson interference mechanism includes:

a sensing optical fiber, having a reference arm and a sensing arm;
a front-end device, configured to receive the input optical signal, and transmit the input optical signal from a first end of the sensing optical fiber to the reference arm and the sensing arm;
a rear-end device, configured to feed back the input optical signal from a second end of the sensing optical fiber to the first end of the sensing optical fiber so as to form an interference signal; and
a photodetector, arranged at the first end of the sensing optical fiber, and configured to receive and output the interference signal.

In an exemplary embodiment of the present disclosure, the audio output mechanism is configured to restore the audio signal based on the following equations:

$$I = I_1 + I_2 + 2\sqrt{I_1 I_2} \cos(\Delta\varphi) \qquad (1)$$

$$\Delta\varphi = n\frac{2\pi}{\lambda}L\left\{1 - \frac{1}{2}n^2\left[(1-v)P_{12} - vP_{11}\right]\right\}\varepsilon_3 \qquad (2)$$

$$\varepsilon_3 = k \cdot p \qquad (3)$$

where $I$ represents a light intensity of the interference signal, $I_1$ and $I_2$ respectively represent light intensities of the optical signals in the reference arm and the sensing arm and $\Delta\varphi$ represents a phase difference therebetween, $n$ represents an effective refractive index of the sensing optical fiber, $\lambda$ represents an incident wavelength of the input optical signal, $P_{12}$ and $P_{11}$ represent Pockel constants, $v$ represents a Poisson's ratio, $\varepsilon_3$ represents an axial length variation rate of the sensing arm, $L$ represents a vibration length, $k$ represents an inherent parameter of the sensing optical fiber, and $p$ represents a sound pressure when the sound signal is applied to the sensing arm.

In an exemplary embodiment of the present disclosure, the front-end device includes an optical fiber coupler.

In an exemplary embodiment of the present disclosure, the rear-end device includes a Faraday rotator mirror or a reflective mirror.

In an exemplary embodiment of the present disclosure, the sensing optical fiber is configured to at least partially multiplex an intrusion-sensing optical fiber in the distributed optical fiber perimeter security system.

In an exemplary embodiment of the present disclosure, the sensing optical fiber is arranged in a mesh shape, a spiral shape or a straight line shape.

In an exemplary embodiment of the present disclosure, the audio output mechanism includes:

a processing unit, configured to restore, based on the interference signal of any of the protection areas, an audio signal of the protection area;

a control unit, configured to output a control signal upon receiving an alarm signal of any of the protection areas, the control signal at least including information of the protection area from which the alarm signal is sent; and

a gating unit, connected to the control unit and the processing unit, and configured to output, upon receiving the control signal and based on the control signal, the audio signal of the protection area from which the alarm signal is sent.

In an exemplary embodiment of the present disclosure, the audio output mechanism further includes:
a demodulation unit, configured to demodulate the audio signal to play and/or store a sound corresponding to the audio signal.

According to a second aspect of the present disclosure, a distributed optical fiber perimeter security system is provided. The system includes:

an intrusion sensing system, configured to acquire intrusion vibration signals of a plurality of protection areas;

an alarming unit, configured to send, when judging that an abnormal event occurs in any of the protection areas based on the intrusion vibration signals, an alarm signal of the protection area; and

any one sound restoration system as defined above, configured to output an audio signal restored based on an interference signal of the protection area when the alarm signal of the protection area is received.

In an exemplary embodiment of the present disclosure, the intrusion sensing system includes an optical fiber configured to sense and transmit the intrusion vibration signals, a sensing optical fiber of the optical fiber Michelson interference mechanism at least partially multiplexing the optical fiber.

According to a third aspect of the present disclosure, a sound restoration method is provided, which is applied to a distributed optical fiber perimeter security system which monitors several protection areas. The sound restoration method includes:

providing a laser signal;

splitting the laser signal into a plurality of input optical signals;

providing a plurality of optical fiber Michelson interference mechanisms and correspondingly arranging the optical fiber Michelson interference mechanisms in the protection areas, each of the optical fiber Michelson interference mechanisms being configured to receive one of the input optical signals and output an interference signal in response to a surrounding sound pressure; and

receiving the interference signals, and when an alarm signal of any of the protection areas is received, outputting an audio signal restored based on the interference signal of the protection area.

In an exemplary embodiment of the present disclosure, the audio signal is restored based on a light intensity of the interference signal.

In an exemplary embodiment of the present disclosure, the audio signal is restored based on the following equations:

$$I = I_1 + I_2 + 2\sqrt{I_1 I_2}\cos\left(\Delta\varphi\right) \tag{1}$$

$$\Delta\varphi = n\frac{2\pi}{\lambda}L\left\{1 - \frac{1}{2}n^2\left[\left(1-v\right)P_{12} - vP_{11}\right]\right\}\varepsilon_3 \tag{2}$$

$$\varepsilon_3 = k\cdot p \tag{3}$$

where $I$ represents a light intensity of the interference signal, the optical fiber Michelson interference mechanism includes a sensing optical fiber having a reference arm and a sensing arm, $I_1$ and $I_2$ respectively represent light intensities of the optical signals in the reference arm and the sensing arm and $\Delta\varphi$ represents a phase difference therebetween, $n$ represents an effective refractive index of the sensing optical fiber, $\lambda$ represents an incident wavelength of the input optical signal, $P_{12}$ and $P_{11}$ represent Pockel constants, $v$ represents a Poisson's ratio, $\varepsilon_3$ represents an axial length variation rate of the sensing arm, $L$ represents a vibration length, $k$ represents an inherent parameter of the sensing optical fiber, and $p$ represents a sound pressure when the sound signal is applied to the sensing arm.

In the exemplary embodiments of the present disclosure, interference signals generated based on the sound pressures of audio signals of a plurality of protection areas are acquired, and when an alarm signal of any of the protection areas is received, an audio signal restored based on the interference signal of the protection area is output. In this way, a user is facilitated to further make an accurate judgment on whether an abnormal event such as an intrusion behavior occurs, thereby greatly improving the user's capability in identifying abnormal events, and thus timely finding abnormal conditions and abnormal situations, and reducing false alarms. In addition, the sound restoration system outputs the corresponding audio signal only when the alarm signal is received, which in one aspect prevents interference caused to user's judgment and in another aspect saves system resources.

## BRIEF DESCRIPTION OF THE DRAWINGS

The accompanying drawings herein, which are incorporated into and constitute a part of the specification, illustrate embodiments consistent with the present invention, and together with the specification, serve to explain the principles of the present invention. Apparently, the accompanying drawings described hereinafter only illustrate some embodiments of the present invention, and for persons skilled in the art, other accompanying drawings may also be derived based on these accompanying drawings without inventive labor.

FIG. 1 is a schematic structural diagram of a sound restoration system according to an exemplary embodiment of the present invention;
FIG. 2 is a schematic structural diagram of an optical fiber Michelson interference mechanism according to an exemplary embodiment of the present invention;
FIG. 3 is a schematic structural diagram of an audio output mechanism according to an exemplary embodiment of the present invention; and
FIG. 4 is a schematic flowchart of a sound restoration method according to an exemplary embodiment of the present invention.

Reference numerals and denotations thereof:

11      -laser generation mechanism
12      -beam splitting mechanism
13      -optical fiber Michelson interference mechanism
131     -sensing optical fiber
132     -front-end device
133     -rear-end device
134     -photodetector
14      -audio output mechanism
141     -processing unit
142     -control unit
143     -gating unit
144     -demodulation unit

## DETAILED DESCRIPTION

Exemplary embodiments of the present disclosure are hereinafter described more fully with reference to the accompany drawings. However, the exemplary embodiments may be implemented in a plurality of manners, and shall not be construed as being limited to the implementations described hereinafter. On the contrary, such exemplary embodiments more thoroughly and completely illustrate the present disclosure, and convey the concepts of the exemplary embodiments to persons skilled in the art. In the drawings, like reference numerals denote like or similar structures or elements. Therefore, detailed descriptions of these structures or elements are not given any further.

In addition, the described characteristics, structures, or features may be incorporated in one or more embodiments in any suitable manner. In the description hereinafter, more details are provided such that sufficient understanding of the embodiments of the present disclosure may be achieved. However, a person skilled in the art would be aware that the technical solutions of the present disclosure may be practiced without one or more of the specific details, or may be practiced using other components, steps or the like. Under other circumstances, commonly known structures are not illustrated or described in detail to avoid various aspects of the present disclosure from becoming ambiguous.

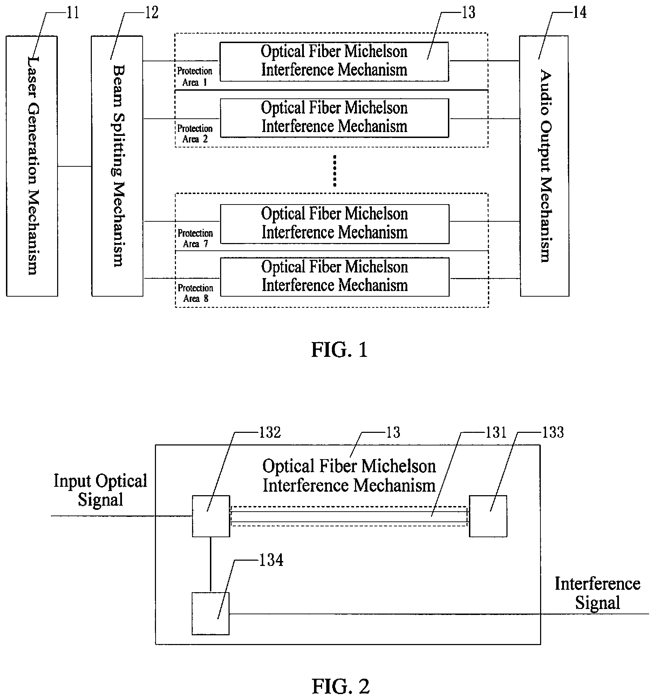

To facilitate a user of a distributed optical fiber perimeter security system to further make an accurate judgment on whether an abnormal event such as an intrusion behavior occurs, this exemplary embodiment firstly provides a sound restoration system. The sound restoration system is applied to the distributed optical fiber perimeter security system which monitors a plurality of protection areas. Referring to FIG. 1, in this exemplary embodiment, the distributed optical fiber perimeter security system is capable of monitoring eight protection areas, and the sound restoration system may mainly include a laser generation mechanism 11, a beam splitting mechanism 12, a plurality of optical fiber Michelson interference mechanisms 13, and an audio output mechanism 14. In addition, a person skilled in the art would also configure other structures such as a power supply, a control component, a signal optimization component and the like according to actual needs.

The laser generation mechanism 11 is mainly configured to provide a laser signal. For example, in this exemplary embodiment, to ensure high stability of light source frequency, high stability of light amplitude and monochromaticity, the laser generation mechanism 11 is preferably a semiconductor distributed feedback laser (DFB) light source, thereby to improve ambient interference resistance capability of the system and improve signal-to-noise ratio of the entire system. The beam splitting mechanism 12 is mainly configured to split the laser signal into a plurality of input optical signal, and thus correspondingly provide the optical signals to the optical fiber Michelson interference mechanisms 13. The beam splitting mechanism 12 may be a beam splitter known in the prior art. In addition, other optical elements such as an isolator, a circulator and the like may be configured, which are not specifically limited in this exemplary embodiment.

The optical fiber Michelson interference mechanism is mainly configured to receive an input optical signal, and under effect of a sound pressure generated by a surrounding audio signal, output an interference signal carrying sound pressure information generated by the audio signal. In addition, the optical fiber Michelson interference mechanism 13 has the advantages of high use security and reliability, strong interference resistance capability and long transmission distance, and thus is very applicable to the sound restoration system in this exemplary embodiment. In this exemplary embodiment, according to the number of protection areas, the beam splitting mechanism 12 splits the laser signal into eight input optical signals, and totally eight optical fiber Michelson interference mechanisms 13 are configured. Each optical fiber Michelson interference mechanism 13 corresponds to and is arranged at one of the protection areas, such that the interference signal carrying sound pressure information generated by the audio signal of the corresponding protection area is acquired.

The audio output mechanism 14 is mainly configured to receive the interference signals, and when an alarm signal of any of the protection areas is received, output an audio signal restored based on the interference signal of the protection area. For example, the audio output mechanism 14 is mainly configured to receive the eight interference signals, output an audio signal restored based on the interference signal of a protection area 2 upon receiving an alarm signal of the protection area 2, and output an audio signal restored based on the interference signal of a protection area 7 upon receiving an alarm signal of the protection area 7, and the like.

In the sound restoration system, interference signals generated based on the sound pressures of audio signals of a plurality of protection areas are acquired, and when an alarm signal of any of the protection areas is received, an audio signal restored based on the interference signal of the protection area is output. In this way, a user is facilitated to further make an accurate judgment on whether an abnormal event such as an intrusion behavior occurs, thereby greatly improving the user's capability in identifying abnormal events, and thus timely knowing abnormal conditions and abnormal situations, and reducing false alarms. In addition, the sound restoration system outputs the corresponding audio signal only when the alarm signal is received, which in one aspect prevents interference caused to user's judgment and in another aspect saves system resources.

Referring to FIG. 2, in this exemplary embodiment, the optical fiber Michelson interference mechanism 13 may include a sensing optical fiber 131, a front-end device 132, a rear-end device 133 and an photodetector 134. The sensing optical fiber 131 has a reference arm and a sensing arm. The front-end device 132 is configured to receive the input optical signal, and transmit the input optical signal from a first end of the sensing optical fiber 131 to the reference arm and the sensing arm. The rear-end device 133 is configured to feed back the input optical signal from a second end of the sensing optical fiber 131 to the first end of the sensing optical fiber 131 so as to form an interference signal. The photodetector 134 is arranged at the first end of the sensing optical fiber 131, and configured to receive the interference signal, and output it after a photoelectric conversion.

For example, in this exemplary embodiment, the front-end device 132 may include an optical fiber coupler, and the rear-end device 133 may include a Faraday rotator mirror (FRM) or a reflective mirror. The optical fiber coupler is configured to receive an input beam, and uniformly couple the input beam to the reference arm and the sensing arm of the sensing optical fiber 131. The input beam in the reference arm and the sensing arm, after reaching a second end of the sensing optical fiber 131, is reflected by the reflective mirror or the Faraday rotator mirror arranged at the second end of the sensing optical fiber 131 back to the reference arm and the sensing arm of the sensing optical fiber 131, to respectively form a reference light and a signal light. The reference light and the signal light form an interference signal in the optical fiber coupler, the interference signal is received by the photodetector 134, and is output to the audio output mechanism 14 after being photoelectrically converted.

In the optical fiber Michelson interference mechanism 13, the sensing optical fiber 131 may partially or totally multiplex the original transmission optical fiber of the distributed optical fiber perimeter security system, for example, the transmission optical fiber originally configured to sense and transmit intrusion vibration signals. In this way, there is no need to newly provide the sensing optical fiber 131, or may prevent extra sensing optical fibers 131, and thus to lower implementation cost of the system. In addition, the sensing optical fiber 131 may be arranged in a mesh shape or a spiral shape. In this way, in one aspect, the interference signals may be more uniformly acquired, and in another aspect, a longer sensing optical fiber 131 improves sensing sensitivity of the system. In addition, the rear-end device 133 is preferably a Faraday rotator mirror, for example, a 45-degree Faraday rotator mirror configured at a tail end of the reference arm and the sensing arm. In this way, the optical signals of the reference arm and the sensing arm rotate by 90 degrees after propagating back and forth, and thus impacts caused by random variations in a polarization state on the intensity of the interference signal are eliminated.

Based on the optical fiber Michelson interference mechanism 13, in this exemplary embodiment, the audio output mechanism 14 may restore the audio signal based on the light intensity of the interference signal. For example:

The light intensity of the interference signal output by the optical fiber Michelson interference mechanism 13 is as follows:

$$I = I_1 + I_2 + 2\sqrt{I_1 I_2} \cos(\Delta\varphi) \qquad (1)$$

where $I_1$ and $I_2$ respectively represent light intensities of the optical signals in the reference arm and the sensing arm and $\Delta\varphi$ represents a phase difference therebetween. According to the optical fiber strain theory, the impacts caused by temperature variations on the optical fiber are ignored, and the phase difference is as follows:

$$\Delta\varphi = n\frac{2\pi}{\lambda}L\left\{1 - \frac{1}{2}n^2\left[(1-v)P_{12} - vP_{11}\right]\right\}\varepsilon_3 \qquad (2)$$

where $n$ represents an effective refractive index of the sensing optical fiber 131, $\lambda$ represents an incident wavelength of the input optical signal, $P_{12}$ and $P_{11}$ represent Pockel constants, $v$ represents a Poisson's ratio, $\varepsilon_3$ represents an axial length variation rate of the sensing arm, $\varepsilon_3 = \Delta L / L$, L represents a vibration length, and $\Delta L$ represents an axial deformation.

According to the acoustic vibration theory, it may be considered that in a sound filed, the axial length variation rate $\varepsilon_3$ of the sensing arm of the sensing optical fiber 131 is approximately proportional to the sound pressure as follows:

$$\varepsilon_3 = k \cdot p \qquad\qquad (3)$$

where $k$ represents an inherent parameter of the sensing optical fiber 131, and $p$ represents a sound pressure when the sound signal is applied to the sensing arm.

As seen from the above formulae (1), (2) and (3), the light intensity of the interference signal output by the optical fiber Michelson interference mechanism 13 is proportional to the ambient sound pressure. Therefore, the audio signals at site may be directly restored based on the interference signal output by the optical fiber Michelson interference mechanism 13.

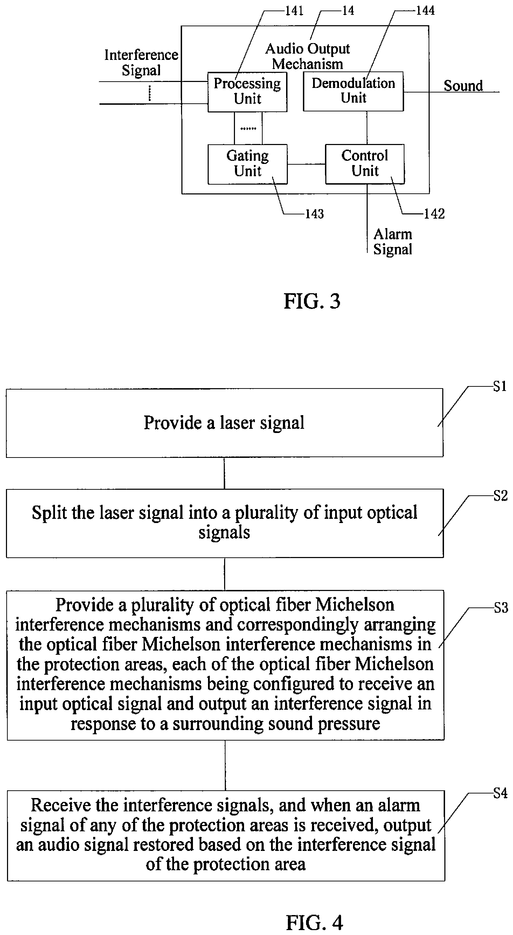

As illustrated in FIG. 3, in this exemplary embodiment, the audio output mechanism 14 may include a processing unit 141, a control unit 142 and a gating unit 143. The processing unit 141 is configured to restore an audio signal of any of the protection areas based on the interference signal of the protection area. The control unit 142 is configured to output a control signal upon receiving an alarm signal from any of the protection areas, wherein the control signal at least includes information of the protection area from which the alarm signal is sent. The gating unit 143 is connected to the control unit 142 and the processing unit 141, and configured to output, upon receiving the control signal and based on the control signal, the audio signal of the protection area from which the alarm signal is sent. In addition, in this exemplary embodiment, the audio output mechanism 14 may further include a demodulation unit 144. The demodulation unit 144 is configured to demodulate the audio signal to play and store a sound corresponding to the audio signal. Nevertheless, persons skilled in the art may easily understand that, in other exemplary embodiments of the present disclosure, the processing unit 141 may start to restore the audio signal of a protection area from the interference signal of the protection area after receiving an alarm signal of the protection area, and then output the audio signal to the control unit 142, which is not limited by the implementation in this exemplary embodiment.

For example, in this exemplary embodiment, the processing unit 141 may be a signal processing circuit, the gating unit 143 may be a single-chip microcomputer gating circuit, and the control unit 142 may be an industrial computer. The interference signals of eight protection areas enter a signal processing circuit after being photoelectrically converted by the photodetector 134, and after the interference signals are processed, such as being filtered and regulated, via the signal processing circuit, the audio signals are demodulated, and eight audio signals are output to the single-chip microcomputer gating circuit. Upon receiving an alarm signal sent from any of the protection areas (the alarm signal may also be generated by the industrial computer itself), the industrial computer sends a control signal at least including information of the protection area to the single-chip microcomputer gating circuit, whereupon the single-chip microcomputer gating circuit gates the audio signal of the protection area and then output the audio signal to the industrial computer. The demodulation unit 144 may be demodulation software installed on the industrial computer. After the audio signal of the protection area is input into the industrial computer, the audio signal is demodulated via the demodulation software to play and store the corresponding sound. In addition, the user may set such parameters as play time, storage time and the like of the sound via the demodulation software.

In the audio output mechanism as described above, the processing unit, gating unit and control unit are illustrated by using specific hardware as an example, but they may also be implemented by using software or hardware in other types; likewise, the demodulation unit may also be implemented in other manners such as hardware; in addition, any combination of the processing unit, gating unit, control unit and demodulation unit may be integrated into a function module or component, which is not specifically limited in this exemplary embodiment.

This exemplary embodiment further provides a distributed optical fiber perimeter security system. The distributed optical fiber perimeter security system mainly includes an intrusion sensing system and any of the sound restoration system as described above. In addition, the security system may further include an alarming unit and other components. The intrusion sensing system is configured to acquire intrusion vibration signals of a plurality of protection areas. As such, the alarming unit judges, based on the intrusion vibration signals, whether an abnormal event such as an intrusion behavior occurs in the protection areas. The alarming unit may be the above mentioned industrial computer, and when sensing that an abnormal event occurs in a certain protection area, the alarming unit may send an alarm signal of the protection area. The sound restoration system as defined above outputs an audio signal restored based on an interference signal of the protection area when the alarm signal of the protection area is received. Therefore, by using the distributed optical fiber perimeter security system in this exemplary embodiment, when an intrusion event occurs in any of the protection areas, the user may correspondingly hear the real-time sound of the protection area on site. Besides, since restoration of the audio signal is accurate, the user may further judge and determine the situation on site.

Furthermore, this exemplary embodiment further provides a sound restoration method corresponding to any of the above sound restoration systems. As illustrated in FIG. 4, the sound restoration method may include:

step S1: providing a laser signal;

step S2: splitting the laser signal into a plurality of input optical signals;

step S3: providing a plurality of optical fiber Michelson interference mechanisms and correspondingly arranging the optical fiber Michelson interference mechanisms in the protection areas, each of the optical fiber Michelson interference mechanisms being configured to receive one of the input optical signals and output an interference signal in response to a surrounding sound pressure; and

step S4: receiving the interference signal, and when an alarm signal of any of the protection areas is received, outputting an audio signal restored based on the interference signal of the protection area.

Implementations and more details of the distributed optical fiber perimeter security systems and the sound restoration methods in this exemplary embodiment have been described in detail in the above descriptions of the sound restoration systems, which are thus not described herein any further.

In conclusion, in this exemplary embodiment, interference signals generated based on the sound pressures of audio signals of a plurality of protection areas are acquired, and when an alarm signal of any of the protection areas is received, an audio signal restored based on the interference signal of the protection area is output. In this way, a user is facilitated to further make an accurate judgment on whether an abnormal event such as an intrusion behavior occurs, thereby greatly improving the user's capability in identifying abnormal events, and thus timely knowing abnormal conditions and abnormal situations, and reducing false alarms. In addition, the sound restoration system outputs the corresponding audio signal only when the alarm signal is received, which in one aspect prevents interference caused to user's judgment and in another aspect saves system resources. Further, in this exemplary embodiment, by establishing an optical fiber Michelson interference mechanism and providing an interference signal restoration algorithm, accuracy of restoring audio signals may be improved, and the user is facilitated to make a more accurate judgment. In addition, in this exemplary embodiment, the sensing optical fiber in the optical fiber Michelson interference mechanism may multiplex the original optical fiber in the distributed optical fiber perimeter security system. Therefore, the implementation cost is effectively reduced, and a high practicality is achieved.

The present disclosure has been described with reference to the above embodiments. However, the above embodiments are merely exemplary embodiments for practicing the present disclosure. It should be noted that the disclosed embodiments are not intended to limit the scope of the present disclosure. On the contrary, various modifications and variations may be made and the scope of the protection is defined by the appended claims.

## Claims

1. A sound restoration system, applied to a distributed optical fiber perimeter security system which monitors several protection areas, the sound restoration system comprising:

   a laser generation mechanism (11), configured to provide a laser signal;

   a beam splitting mechanism (12), configured to split the laser signal into a plurality of input optical signals;

   a plurality of optical fiber Michelson interference mechanisms (13), correspondingly arranged in the protection areas, each of the optical fiber Michelson interference mechanisms being configured to receive one of the input optical signals and output an interference signal in response to a surrounding sound pressure;

   the sound restoration system being **characterized in that** it further comprises:

   an audio output mechanism (14), configured to receive the interference signals, and after an alarm signal of any one of the protection areas is received, restore real-time audio signal in the any one of the protection areas based on the interference signals to assist the user in confirming whether the alarm signal is a real alarm signal, and output the restored audio signal to the user.

2. The sound restoration system according to claim 1, wherein the audio output mechanism (14) is configured to restore the audio signal based on a light intensity of the interference signal.

3. The sound restoration system according to claim 1, wherein the optical fiber Michelson interference mechanism (13) comprises:

   a sensing optical fiber (131), having a reference arm and a sensing arm;

   a front-end device (132), configured to receive the input optical signal, and transmit the input optical signal from a first end of the sensing optical fiber to the reference arm and the sensing arm;

   a rear-end device (133), configured to feed back the input optical signal from a second end of the sensing optical fiber to the first end of the sensing optical fiber so as to form an interference signal; and

a photodetector (134), arranged at the first end of the sensing optical fiber, and configured to receive and output the interference signal.

4. The sound restoration system according to claim 3, wherein the audio output mechanism (14) is configured to restore the audio signal based on the following equations:

$$I = I_1 + I_2 + 2\sqrt{I_1 I_2} \cos\left(\Delta\varphi\right) \qquad (1)$$

$$\Delta\varphi = n\frac{2\pi}{\lambda}L\left\{1 - \frac{1}{2}n^2\left[\left(1-v\right)P_{12} - vP_{11}\right]\right\}\varepsilon_3 \qquad (2)$$

$$\varepsilon_3 = k \cdot p \qquad (3)$$

where $I$ represents a light intensity of the interference signal, $I_1$ and $I_2$ respectively represent light intensities of the optical signals in the reference arm and the sensing arm and $\Delta\varphi$ represents a phase difference therebetween, $n$ represents an effective refractive index of the sensing optical fiber, $\lambda$ represents an incident wavelength of the input optical signal, $P_{12}$ and $P_{11}$ represent Pockel constants, $v$ represents a Poisson's ratio, $\varepsilon_3$ represents an axial length variation rate of the sensing arm, $L$ represents a vibration length, $k$ represents an inherent parameter of the sensing optical fiber, and $p$ represents a sound pressure when the sound signal is applied to the sensing arm.

5. The sound restoration system according to claim 3, wherein the front-end device (132) comprises an optical fiber coupler.

6. The sound restoration system according to claim 3, wherein the rear-end device (133) comprises a Faraday rotator mirror or a reflective mirror.

7. The sound restoration system according to claim 3, wherein the sensing optical fiber (131) is configured to at least partially multiplex an intrusion-sensing optical fiber in the distributed optical fiber perimeter security system.

8. The sound restoration system according to claim 3, wherein the sensing optical fiber (131) is arranged in a mesh shape, a spiral shape or a straight line shape.

9. The sound restoration system according to any one of claims 1 to 8, wherein the audio output mechanism (14) comprises:

   a processing unit (141), configured to restore, based on the interference signal of any of the protection areas, an audio signal of the protection area;
   a control unit (142), configured to output a control signal upon receiving an alarm signal of any of the protection areas, the control signal at least comprising information of the protection area from which the alarm signal is sent; and
   a gating unit (143), connected to the control unit and the processing unit, and configured to output, upon receiving the control signal and based on the control signal, the audio signal of the protection area from which the alarm signal is sent.

10. The sound restoration system according to claim 9, wherein the audio output mechanism (14) further comprises:
    a demodulation unit (144), configured to demodulate the audio signal to play and/or store a sound corresponding to the audio signal.

11. A distributed optical fiber perimeter security system, comprising:

    an intrusion sensing system, configured to acquire intrusion vibration signals of a plurality of protection areas;
    an alarming unit, configured to send, when judging that an abnormal event occurs in any of the protection areas based on the intrusion vibration signals, an alarm signal of the protection area; and
    a sound restoration system as defined in any one of claims 1 to 10, configured to output an audio signal restored based on an interference signal of the protection area when the alarm signal of the protection area is received.

**12.** The distributed optical fiber perimeter security system according to claim 11, wherein the intrusion sensing system comprises an optical fiber configured to sense and transmit the intrusion vibration signals, a sensing optical fiber (131) of the optical fiber Michelson interference mechanism at least partially multiplexing the optical fiber.

**13.** A sound restoration method, applied to a distributed optical fiber perimeter security system which monitors several protection areas, the sound restoration method comprising:

providing (S1) a laser signal;
splitting (S2) the laser signal into a plurality of input optical signals;
providing (S3) a plurality of optical fiber Michelson interference mechanisms and correspondingly arranging the optical fiber Michelson interference mechanisms in the protection areas, each of the optical fiber Michelson interference mechanisms being configured to receive one of the input optical signals and output an interference signal in response to a surrounding sound pressure;
the sound restoration method being **characterized in that** it further comprises:
receiving (S4) the interference signals, and after an alarm signal of any one of the protection areas is received, restoring real-time audio signal in the any one of the protection areas based on the interference signals to assist the user in confirming whether the alarm signal is a real alarm signal, and outputting the restored audio signal to the user.

**14.** The sound restoration method according to claim 13, wherein the audio signal is restored based on a light intensity of the interference signal.

**15.** The sound restoration method according to claim 13, wherein the audio signal is restored based on the following equations:

$$I = I_1 + I_2 + 2\sqrt{I_1 I_2}\cos\left(\Delta\varphi\right) \qquad (1)$$

$$\Delta\varphi = n\frac{2\pi}{\lambda}L\left\{1 - \frac{1}{2}n^2\left[\left(1-v\right)P_{12} - vP_{11}\right]\right\}\varepsilon_3 \qquad (2)$$

$$\varepsilon_3 = k\cdot p \qquad (3)$$

where I represents a light intensity of the interference signal, the optical fiber Michelson interference mechanism comprises a sensing optical fiber having a reference arm and a sensing arm, $I_1$ and $I_2$ respectively represent light intensities of the optical signals in the reference arm and the sensing arm and $\Delta\varphi$ represents a phase difference therebetween, $n$ represents an effective refractive index of the sensing optical fiber, $\lambda$ represents an incident wavelength of the input optical signal, $P_{12}$ and $P_{11}$ represent Pockel constants, $v$ represents a Poisson's ratio, $\varepsilon_3$ represents an axial length variation rate of the sensing arm, $L$ represents a vibration length, $k$ represents an inherent parameter of the sensing optical fiber, and $p$ represents a sound pressure when the sound signal is applied to the sensing arm.

**Patentansprüche**

**1.** Schallwiederherstellungssystem, das auf ein verteiltes Lichtwellenleiter-Perimetersicherheitssystem angewandt wird, welches mehrere Schutzbereiche überwacht, wobei das Schallwiederherstellungssystem umfasst:

einen Lasererzeugungsmechanismus (11), der dazu ausgestaltet ist, ein Lasersignal bereitzustellen,
einen Strahlteilungsmechanismus (12), der dazu ausgestaltet ist, das Lasersignal in mehrere optische Eingangssignale zu teilen,
mehrere Michelson-Lichtwellenleiter-Interferenzmechanismen (13), die entsprechend in den Schutzbereichen angeordnet sind, wobei jeder der Michelson-Lichtwellenleiter-Interferenzmechanismen dazu ausgestaltet ist, eines von den optischen Eingangssignalen zu empfangen und ein Interferenzsignal als Reaktion auf einen umgebenden Schalldruck auszugeben,
wobei das Schallwiederherstellungssystem **dadurch gekennzeichnet ist, dass** es ferner umfasst:
einen Audioausgabemechanismus (14), der dazu ausgestaltet ist, die Interferenzsignale zu empfangen und, nachdem ein Alarmsignal von einem der Schutzbereiche empfangen wurde, ein Echtzeit-Audiosignal in dem einen der Schutzbereiche auf Basis der Interferenzsignale wiederherzustellen, um den Benutzer beim Bestätigen, ob das Alarmsignal ein echtes Alarmsignal ist, zu unterstützen und das wiederhergestellte Audiosignal an den Benutzer auszugeben.

2. Schallwiederherstellungssystem nach Anspruch 1, wobei der Audioausgabemechanismus (14) dazu ausgestaltet ist, das Audiosignal auf Basis einer Lichtintensität des Interferenzsignals wiederherzustellen.

3. Schallwiederherstellungssystem nach Anspruch 1, wobei der Michelson-Lichtwellenleiter-Interferenzmechanismus (13) umfasst:

einen Erfassungslichtwellenleiter (131), der einen Referenzarm und einen Erfassungsarm aufweist,
eine Vorderende-Vorrichtung (132), die dazu ausgestaltet ist, das optische Eingangssignal zu empfangen und das optische Eingangssignal von einem ersten Ende des Erfassungslichtwellenleiters an den Referenzarm und den Erfassungsarm zu übertragen,
eine Hinterende-Vorrichtung (133), die dazu ausgestaltet ist, das optische Eingangssignal von einem zweiten Ende des Erfassungslichtwellenleiters an das erste Ende des Erfassungslichtwellenleiters rückzukoppeln, um ein Interferenzsignal zu bilden, und
einen Photodetektor (134), der an dem ersten Ende des Erfassungslichtwellenleiters angeordnet ist und dazu ausgestaltet ist, das Interferenzsignal zu empfangen und auszugeben.

4. Schallwiederherstellungssystem nach Anspruch 3, wobei der Audioausgabemechanismus (14) dazu ausgestaltet ist, das Audiosignal auf Basis der folgenden Gleichungen wiederherzustellen:

$$I = I_1 + I_2 + 2\sqrt{I_1 I_2}\cos\left(\Delta\varphi\right) \qquad (1)$$

$$\Delta\varphi = n\frac{2\pi}{\lambda}L\left\{1 - \frac{1}{2}n^2\left[(1-\nu)P_{12} - \nu P_{11}\right]\right\}\varepsilon_3 \qquad (2)$$

$$\varepsilon_3 = k \cdot p \qquad (3)$$

wobei $I$ eine Lichtintensität des Interferenzsignals darstellt, $I_1$ und $I_2$ jeweils Lichtintensitäten der optischen Signale in dem Referenzarm und dem Erfassungsarm darstellen und $\Delta\varphi$ eine Phasendifferenz dazwischen darstellt, $n$ einen effektiven Brechungsindex des Erfassungslichtwellenleiters darstellt, $\lambda$ eine einfallende Wellenlänge des optischen Eingangssignals darstellt, $P_{12}$ und $P_{11}$ Pockel-Konstanten darstellen, $\nu$ eine Poissonzahl darstellt, $\varepsilon_3$ eine axiale Längenänderungsrate des Erfassungsarms darstellt, $L$ *eine* Vibrationslänge darstellt, $k$ einen Eigenparameter des Erfassungslichtwellenleiters darstellt und $p$ einen Schalldruck darstellt, wenn das Schallsignal auf den Erfassungsarm angewandt wird.

5. Schallwiederherstellungssystem nach Anspruch 3, wobei die Vorderende-Vorrichtung (132) einen faseroptischen Koppler umfasst.

6. Schallwiederherstellungssystem nach Anspruch 3, wobei die Hinterende-Vorrichtung (133) einen Faraday-Rotatorspiegel oder einen reflektierenden Spiegel umfasst.

7. Schallwiederherstellungssystem nach Anspruch 3, wobei der Erfassungslichtwellenleiter (131) dazu ausgestaltet ist, einen Einbruchserfassungslichtwellenleiter in dem verteilten Lichtwellenleiter-Perimetersicherheitssystem zumindest teilweise zu multiplexen.

8. Schallwiederherstellungssystem nach Anspruch 3, wobei der Erfassungslichtwellenleiter (131) in einer Maschenform, einer Spiralform oder einer geraden Linienform angeordnet ist.

9. Schallwiederherstellungssystem nach einem der Ansprüche 1 bis 8, wobei der Audioausgabemechanismus (14) umfasst:

eine Verarbeitungseinheit (141), die dazu ausgestaltet ist, auf Basis des Interferenzsignals von einem der Schutzbereiche ein Audiosignal des Schutzbereichs wiederherzustellen,
eine Steuereinheit (142), die dazu ausgestaltet ist, ein Steuersignal nach Empfang eines Alarmsignals von einem der Schutzbereiche auszugeben, wobei das Steuersignal zumindest Informationen des Schutzbereichs umfasst, von welchem das Alarmsignal gesendet wird, und
eine Ansteuerungseinheit (143), die mit der Steuereinheit und der Verarbeitungseinheit verbunden ist und dazu ausgestaltet ist, nach Empfang des Steuersignals und auf Basis des Steuersignals das Audiosignal des Schutzbereichs auszugeben, von welchem das Alarmsignal gesendet wird.

10. Schallwiederherstellungssystem nach Anspruch 9, wobei der Audioausgabemechanismus (14) ferner umfasst:
eine Demodulationseinheit (144), die dazu ausgestaltet ist, das Audiosignal zu demodulieren, um einen Schall wiederzugeben und/oder zu speichern, der dem Audiosignal entspricht.

11. Verteiltes Lichtwellenleiter-Perimetersicherheitssystem, umfassend:

ein Einbruchserfassungssystem, das dazu ausgestaltet ist, Einbruchsvibrationssignale von mehreren Schutzbereichen zu erfassen,
eine Alarmeinheit, die dazu ausgestaltet ist, wenn beurteilt wird, dass ein anormales Ereignis in einem der Schutzbereiche auf Basis der Einbruchsvibrationssignale auftritt, ein Alarmsignal des Schutzbereichs zu senden, und
ein Schallwiederherstellungssystem, wie in einem der Ansprüche 1 bis 10 definiert, das dazu ausgestaltet ist, ein Audiosignal auszugeben, das auf Basis eines Interferenzsignals des Schutzbereichs wiederhergestellt wird, wenn das Alarmsignal des Schutzbereichs empfangen wird.

12. Verteiltes Lichtwellenleiter-Perimetersicherheitssystem nach Anspruch 11, wobei das Einbruchserfassungssystem einen Lichtwellenleiter umfasst, der dazu ausgestaltet ist, die Einbruchsvibrationssignale zu erfassen und zu übertragen, wobei ein Erfassungslichtwellenleiter (131) des Michelson-Lichtwellenleiter-Interferenzmechanismus den Lichtwellenleiter zumindest teilweise multiplext.

13. Schallwiederherstellungsverfahren, das auf ein verteiltes Lichtwellenleiter-Perimetersicherheitssystem angewandt wird, welches mehrere Schutzbereiche überwacht, wobei das Schallwiederherstellungsverfahren umfasst:

Bereitstellen (S1) eines Lasersignals,
Teilen (S2) des Lasersignals in mehrere optische Eingangssignale,
Bereitstellen (S3) von mehreren Michelson-Lichtwellenleiter-Interferenzmechanismen und entsprechend Anordnen der Michelson-Lichtwellenleiter-Interferenzmechanismen in den Schutzbereichen, wobei jeder der Michelson-Lichtwellenleiter-Interferenzmechanismen dazu ausgestaltet ist, eines von den optischen Eingangssignalen zu empfangen und ein Interferenzsignal als Reaktion auf einen umgebenden Schalldruck auszugeben, wobei das Schallwiederherstellungsverfahren **dadurch gekennzeichnet ist, dass** es ferner umfasst:
Empfangen (S4) der Interferenzsignale und, nachdem ein Alarmsignal von einem der Schutzbereiche empfangen wurde, Wiederherstellen eines Echtzeit-Audiosignals in dem einen der Schutzbereiche auf Basis der Interferenzsignale, um den Benutzer beim Bestätigen, ob das Alarmsignal ein echtes Alarmsignal ist, zu unterstützen, und Ausgeben des wiederhergestellten Audiosignals an den Benutzer.

14. Schallwiederherstellungsverfahren nach Anspruch 13, wobei das Audiosignal auf Basis einer Lichtintensität des Interferenzsignals wiederhergestellt wird.

15. Schallwiederherstellungsverfahren nach Anspruch 13, wobei das Audiosignal auf Basis der folgenden Gleichungen wiederhergestellt wird:

$$I = I_1 + I_2 + 2\sqrt{I_1 I_2} \cos(\Delta\varphi) \qquad (1)$$

$$\Delta\varphi = n\frac{2\pi}{\lambda} L \left\{ 1 - \frac{1}{2} n^2 \left[ (1-v) P_{12} - v P_{11} \right] \right\} \varepsilon_3 \qquad (2)$$

$$\varepsilon_3 = k \cdot p \qquad (3)$$

wobei *I* eine Lichtintensität des Interferenzsignals darstellt, der Michelson-Lichtwellenleiter-Interferenzmechanismus einen Erfassungslichtwellenleiter umfasst, der einen Referenzarm und einen Erfassungsarm aufweist, $I_1$ und $I_2$ jeweils Lichtintensitäten der optischen Signale in dem Referenzarm und dem Erfassungsarm darstellen und $\Delta\varphi$ eine Phasendifferenz dazwischen darstellt, *n* einen effektiven Brechungsindex des Erfassungslichtwellenleiters darstellt, $\lambda$ eine einfallende Wellenlänge des optischen Eingangssignals darstellt, $P_{12}$ und $P_{11}$ Pockel-Konstanten darstellen, *v* eine Poissonzahl darstellt, $\varepsilon_3$ eine axiale Längenänderungsrate des Erfassungsarms darstellt, L eine Vibrationslänge darstellt, *k* einen Eigenparameter des Erfassungslichtwellenleiters darstellt und *p* einen Schalldruck darstellt, wenn das Schallsignal auf den Erfassungsarm angewandt wird.

## Revendications

1. Système de restitution sonore, appliqué à un système de sécurité périmétrique à fibre optique répartie qui surveille plusieurs zones de protection, le système de restitution sonore comprenant :

   un mécanisme de génération de laser (11), configuré pour fournir un signal laser ;
   un mécanisme de division de faisceau (12), configuré pour diviser le signal laser en une pluralité de signaux optiques d'entrée ;
   une pluralité de mécanismes d'interférence de Michelson à fibre optique (13), agencés de manière correspondante dans les zones de protection, chacun des mécanismes d'interférence de Michelson à fibre optique étant configuré pour recevoir l'un des signaux optiques d'entrée et délivrer en sortie un signal d'interférence en réponse à une pression acoustique environnante ;
   le système de restitution sonore étant **caractérisé en ce qu'**il comprend en outre :
   un mécanisme de sortie audio (14), configuré pour recevoir les signaux d'interférence, et après qu'un signal d'alarme de l'une quelconque des zones de protection est reçu, restituer le signal audio en temps réel dans l'une quelconque des zones de protection sur la base des signaux d'interférence pour aider l'utilisateur à confirmer si le signal d'alarme est un signal d'alarme réel, et délivrer en sortie le signal audio restitué à l'utilisateur.

2. Système de restitution sonore selon la revendication 1, dans lequel le mécanisme de sortie audio (14) est configuré pour restituer le signal audio sur la base d'une intensité de lumière du signal d'interférence.

3. Système de restitution sonore selon la revendication 1, dans lequel le mécanisme d'interférence de Michelson à fibre optique (13) comprend :

   une fibre optique de détection (131), ayant un bras de référence et un bras de détection ;
   un dispositif frontal (132), configuré pour recevoir le signal optique d'entrée et émettre le signal optique d'entrée d'une première extrémité de la fibre optique de détection au bras de référence et au bras de détection ;
   un dispositif arrière (133), configuré pour renvoyer le signal optique d'entrée d'une seconde extrémité de la fibre optique de détection à la première extrémité de la fibre optique de détection de manière à former un signal d'interférence ; et
   un photodétecteur (134), agencé à la première extrémité de la fibre optique de détection, et configuré pour recevoir et délivrer en sortie le signal d'interférence.

4. Système de restitution sonore selon la revendication 3, dans lequel le mécanisme de sortie audio (14) est configuré pour restituer le signal audio sur la base des équations suivantes :

$$I = I_1 + I_2 + 2\sqrt{I_1 I_2}\cos(\Delta\varphi) \qquad (1)$$

$$\Delta\varphi = n\frac{2\pi}{\lambda}L\left\{1 - \frac{1}{2}n^2[(1-v)P_{12} - vP_{11}]\right\}\varepsilon_3 \qquad (2)$$

$$\varepsilon_3 = k \cdot p \qquad (3)$$

où $I$ représente une intensité de lumière du signal d'interférence, $I_1$ et $I_2$ représentent respectivement les intensités de lumière des signaux optiques dans le bras de référence et le bras de détection et $\Delta\varphi$ représente une différence de phase entre eux, $n$ représente un indice de réfraction efficace de la fibre optique de détection, $\lambda$ représente une longueur d'onde incidente du signal optique d'entrée, $P_{12}$ et $P_{11}$ représentent des constantes de Pockel, $v$ représente un coefficient de Poisson, $\varepsilon_3$ représente un taux de variation de longueur axiale du bras de détection, $L$ représente une longueur de vibration, $k$ représente un paramètre inhérent de la fibre optique de détection, et $p$ représente une pression acoustique lorsque le signal sonore est appliqué au bras de détection.

5. Système de restitution sonore selon la revendication 3, dans lequel le dispositif frontal (132) comprend un coupleur de fibres optiques.

6. Système de restitution sonore selon la revendication 3, dans lequel le dispositif arrière (133) comprend un miroir à rotateur de Faraday ou un miroir réfléchissant.

7. Système de restitution sonore selon la revendication 3, dans lequel la fibre optique de détection (131) est configurée pour multiplexer au moins partiellement une fibre optique de détection d'intrusion dans le système de sécurité périmétrique à fibre optique répartie.

8. Système de restitution sonore selon la revendication 3, dans lequel la fibre optique de détection (131) est agencée selon une forme de maille, une forme de spirale ou une forme de ligne droite.

9. Système de restitution sonore selon l'une quelconque des revendications 1 à 8, dans lequel le mécanisme de sortie audio (14) comprend :

une unité de traitement (141), configurée pour restituer, sur la base du signal d'interférence de l'une quelconque des zones de protection, un signal audio de la zone de protection ;
une unité de commande (142), configurée pour délivrer en sortie un signal de commande lors de la réception d'un signal d'alarme de l'une quelconque des zones de protection, le signal de commande comprenant au moins des informations de la zone de protection à partir de laquelle le signal d'alarme est envoyé ; et
une unité de portillonnage (143), connectée à l'unité de commande et à l'unité de traitement, et configurée pour délivrer en sortie, lors de la réception du signal de commande et sur la base du signal de commande, le signal audio de la zone de protection à partir de laquelle le signal d'alarme est envoyé.

10. Système de restitution sonore selon la revendication 9, dans lequel le mécanisme de sortie audio (14) comprend en outre :
une unité de démodulation (144), configurée pour démoduler le signal audio pour lire et/ou stocker un son correspondant au signal audio.

11. Système de sécurité périmétrique à fibre optique répartie, comprenant :

un système de détection d'intrusion, configuré pour acquérir des signaux de vibration d'intrusion d'une pluralité de zones de protection ;
une unité d'alarme, configurée pour envoyer, lorsqu'il est estimé qu'un événement anormal se produit dans l'une quelconque des zones de protection sur la base des signaux de vibration d'intrusion, un signal d'alarme de la zone de protection ; et
un système de restitution sonore tel que défini selon l'une quelconque des revendications 1 à 10, configuré pour délivrer en sortie un signal audio restitué sur la base d'un signal d'interférence de la zone de protection lorsque le signal d'alarme de la zone de protection est reçu.

**12.** Système de sécurité périmétrique à fibre optique répartie selon la revendication 11, dans lequel le système de détection d'intrusion comprend une fibre optique configurée pour détecter et émettre les signaux de vibration d'intrusion, une fibre optique de détection (131) du mécanisme d'interférence de Michelson à fibre optique multiplexant au moins partiellement la fibre optique.

**13.** Procédé de restitution sonore, appliqué à un système de sécurité périmétrique à fibre optique répartie qui surveille plusieurs zones de protection, le procédé de restitution sonore comprenant :

la fourniture (S1) d'un signal laser ;
la division (S2) du signal laser en une pluralité de signaux optiques d'entrée ;
la fourniture (S3) d'une pluralité de mécanismes d'interférence de Michelson à fibre optique et l'agencement de manière correspondante des mécanismes d'interférence de Michelson à fibre optique dans les zones de protection, chacun des mécanismes d'interférence de Michelson à fibre optique étant configuré pour recevoir l'un des signaux optiques d'entrée et délivrer en sortie un signal d'interférence en réponse à une pression acoustique environnante ;
le procédé de restitution sonore étant **caractérisé en ce qu'**il comprend en outre :
la réception (S4) des signaux d'interférence, et après qu'un signal d'alarme de l'une quelconque des zones de protection est reçu, la restitution du signal audio en temps réel dans l'une quelconque des zones de protection sur la base des signaux d'interférence pour aider l'utilisateur à confirmer si le signal d'alarme est un signal d'alarme réel, et la sortie du signal audio restitué à l'utilisateur.

**14.** Procédé de restitution sonore selon la revendication 13, dans lequel le signal audio est restitué sur la base d'une intensité de lumière du signal d'interférence.

**15.** Procédé de restitution sonore selon la revendication 13, dans lequel le signal audio est restitué sur la base des équations suivantes :

$$I = I_1 + I_2 + 2\sqrt{I_1 I_2}\cos(\Delta\varphi) \qquad (1)$$

$$\Delta\varphi = n\frac{2\pi}{\lambda}L\left\{1 - \frac{1}{2}n^2[(1-v)P_{12} - vP_{11}]\right\}\varepsilon_3 \qquad (2)$$

$$\varepsilon_3 = k \cdot p \qquad (3)$$

où $I$ représente une intensité de lumière du signal d'interférence, le mécanisme d'interférence de Michelson à fibre optique comprend une fibre optique de détection ayant un bras de référence et un bras de détection, $I_1$ et $I_2$ représentent respectivement les intensités de lumière des signaux optiques dans le bras de référence et le bras de détection et $\Delta\varphi$ représente une différence de phase entre eux, $n$ représente un indice de réfraction efficace de la fibre optique de détection, $\lambda$ représente une longueur d'onde incidente du signal optique d'entrée, $P_{12}$ et $P_{11}$ représentent des constantes de Pockel, $v$ représente un coefficient de Poisson, $\varepsilon_3$ représente un taux de variation de longueur axiale du bras de détection, $L$ représente une longueur de vibration, $k$ représente un paramètre inhérent de la fibre optique de détection, et $p$ représente une pression acoustique lorsque le signal sonore est appliqué au bras de détection.

FIG. 1

FIG. 2

/—141  /—14      /—144

Interference
Signal

Audio Output
Mechanism

Processing
Unit

Demodulation
Unit

Sound

......

Gating
Unit

Control
Unit

`—143

`—142

Alarm
Signal

## FIG. 3

Provide a laser signal — S1

Split the laser signal into a plurality of input optical signals — S2

Provide a plurality of optical fiber Michelson interference mechanisms and correspondingly arranging the optical fiber Michelson interference mechanisms in the protection areas, each of the optical fiber Michelson interference mechanisms being configured to receive an input optical signal and output an interference signal in response to a surrounding sound pressure — S3

Receive the interference signals, and when an alarm signal of any of the protection areas is received, output an audio signal restored based on the interference signal of the protection area — S4

## FIG. 4

**EP 3 321 901 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2627966 A1